# EUROPEAN PATENT SPECIFICATION

(11) **EP 0 435 274 B1**
(45) Date of publication and mention of the grant of the patent: **28.09.1994**
(21) Application number: 90125545.5
(22) Date of filing: 27.12.1990
(51) Int. Cl.: F16L 41/08

(54) **Tubular body having pipe joint member attached thereto**
Rohrförmiger Körper mit daran befestigtem Rohrverbindungsstück
Corps tubulaire et élément de raccordement de tuyaux

(30) Priority: 28.12.1989 JP 152989/89
(43) Date of publication of application: 03.07.1991
(73) Proprietor: SHOWA ALUMINUM CORPORATION, Sakai-shi Osaka (JP)
(72) Inventor: Tokutake, Toshinori, Oyama-shi, Tochigi (JP); Hirano, Hirosaburo, Tochigi (JP)
(74) Representative: TER MEER STEINMEISTER & PARTNER GbR

(56) References cited:
- DE-U- 8 625 810
- FR-A- 764 572
- FR-A- 2 574 533
- GB-A- 505 692
- US-A- 2 333 968

## Description

### BACKGROUND OF THE INVENTION

The invention relates to a tubular body having a pipe joint member according to the preamble of claims 1.

The present invention relates to pipes, headers or like tubular bodies having a pipe joint member, for example, for use in connecting two pipes together in a T-shaped arrangement or in connecting a heat medium feed pipe or discharge pipe to the peripheral wall of the tubular header of a heat exchanger, and a method of producing the same.

The term "aluminum" as used herein includes pure aluminum and aluminum alloys.

For example, when two pipes are to be connected together in a T-shaped arrangement, a pipe joint member having an outward flange at an intermediate portion of its length is attached to the peripheral wall of one of the pipes in communication with the interior thereof, and the other pipe is connected to the pipe with use of the pipe joint member.

The US-A-2 333 968 discloses a tubular body having a pipe joint member. The pipe joint member has an outward flange and a tubular portion extending to one side thereof. The pipe joint member is adapted to be inserted into a hole in the peripheral wall of the tubular body from inside. Thus the surface of the outward flange is a fragmentary cylinder. A ring shaped top member is shifted over the tubular portion of the joint member from outside of the tubular body, and the top member and the flange of the joint member clamp between them a substantial portion of the wall of the tubular body. The two member are held in position by a retaining ring screwed onto the tubular portion of the joint member. Finally, the members are connected by a solder ring.

However, insertion of the base member into the hole from the inner side of the tubular body will be only possible in exceptional cases.

### SUMMARY OF THE INVENTION

The main object of the present invention is to provide a pipe joint arrangement applicable in those cases where access is only possible from the outer side of the tubular body.

To comply with this object, the invention comprises the features of claim 1.

With the assembly of the present invention, the peripheral wall of the tubular body need not be accessible from the inner side thereof. This serves to correspondingly simplify the fabrication process. Additionally, the pipe joint member can be joined to the tubular body simultaneously with the brazing operation for the fabrication of the heat exchanger or the like in which the assembly is to be included.

Embodiments of the present invention will be described below with reference to the accompanying drawings for illustrative purposes only.

### BRIEF DESCRIPTION OF THE DRAWINGS

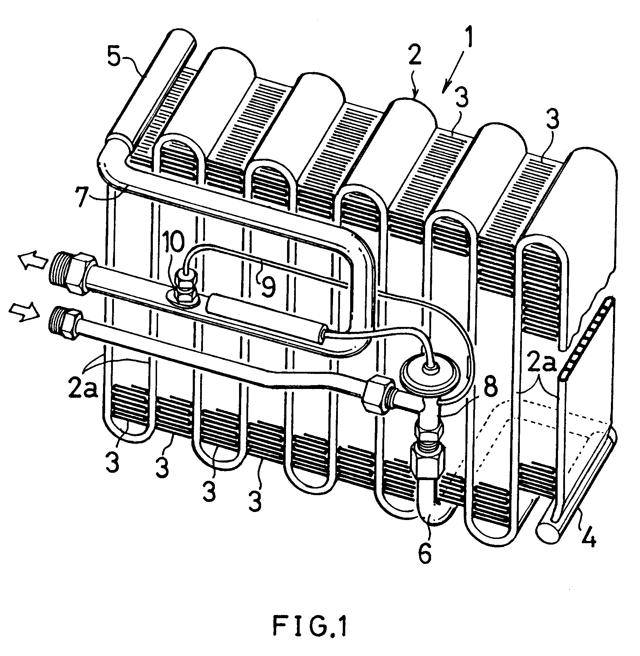

FIGS. 1 to 5 show a tubular body having a pipe joint member as an embodiment of the invention wherein the tubular body is the heat medium discharge pipe of an evaporator for a motor vehicle air conditioner, and the pipe joint member is used for connecting to the discharge pipe an equalizer extending from an expansion valve on the heat medium feed pipe of the evaporator;
FIG. 1 is a perspective view showing the evaporator in its entirety;
FIG. 2 is an exploded perspective view of the joint between the heat medium discharge pipe and the equalizer;
FIG. 3 is an enlarged view in section taken along the line III-III in FIG. 2 with the equalizer omitted;
FIG. 4 is a fragmentary perspective view showing the pipe joint member before it is attached to the discharge pipe;
FIG. 5 is an enlarged view in section taken along the line V-V in FIG. 4;
FIGS. 6 to 10 show a tubular body having a pipe joint member as another embodiment of the invention as applied to each header of a condenser for a motor vehicle air conditioner;

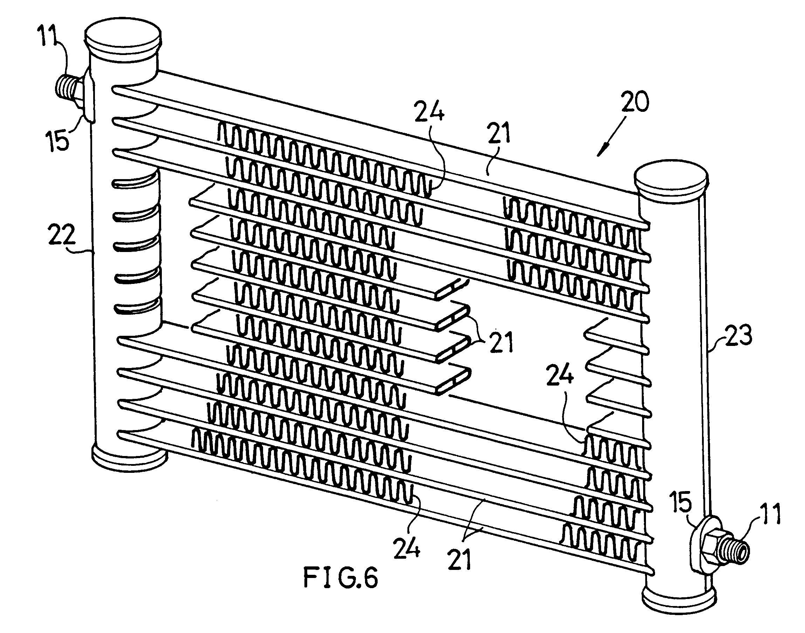

FIG. 6 is a perspective view showing the condenser in its entirety;

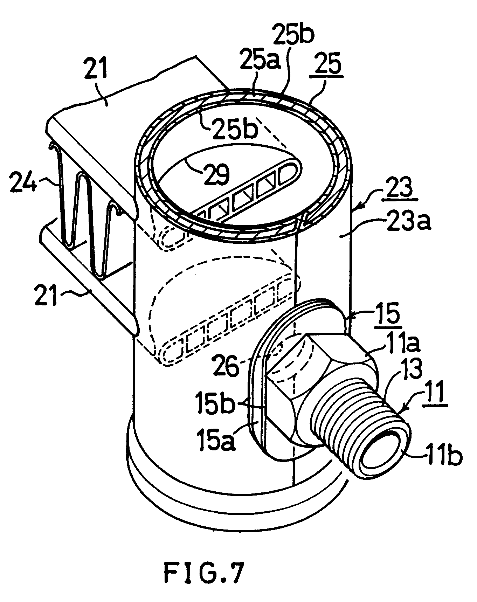

FIG. 7 is a fragmentary perspective view showing on an enlarged scale the pipe joint member as attached to the outlet header; and

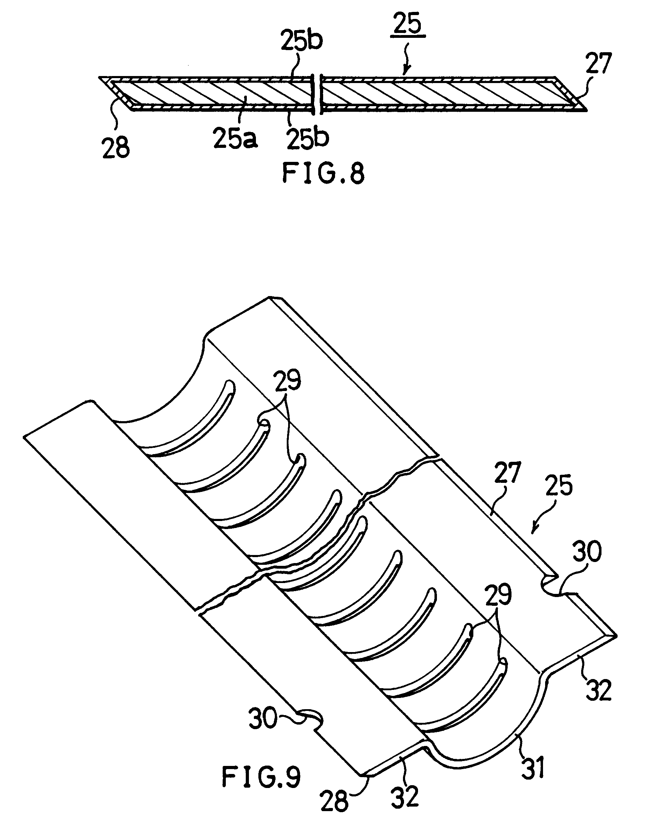

FIGS. 8 to 10 are views showing stepwise a method of producing the outlet header.

### DESCRIPTION OF THE PREFERRED EMBODIMENTS

Throughout the drawings, like parts are designated by like reference numerals.

FIGS. 1 to 5 show an embodiment of the invention for use in an evaporator for motor vehicle air conditioners for connecting an equalizer extending from an expansion valve on the heat medium feed pipe of the evaporator to the heat medium discharge pipe thereof. With reference to FIG. 1 showing the evaporator 1 in its entirety, the evaporator 1 comprises a zigzag flat tube 2 made, for example, of an aluminum extrudate, corrugated fins 3 made, for example, of aluminum and interposed between the adjacent straight tube portions 2a of the flat tube 2, an inlet header 4 made, for example, of aluminum and having one end of the flat tube 2 connected thereto, an outlet header 5 made, for example, of aluminum and having the other end of the flat tube 2 connected thereto, the heat medium feed pipe 6 made, for example, aluminum and connected to the inlet header 4, and the heat medium discharge pipe 7 made, for example, of aluminum and connected to the outlet header 5. The expansion valve 8 is mounted on an intermediate portion of the feed pipe 6 and has connected thereto the equalizer 9 which is made, for example, of aluminum. The other end of the equalizer 9 is connected by a pipe joint 10 to the peripheral wall of the discharge pipe 7 of the evaporator 1.

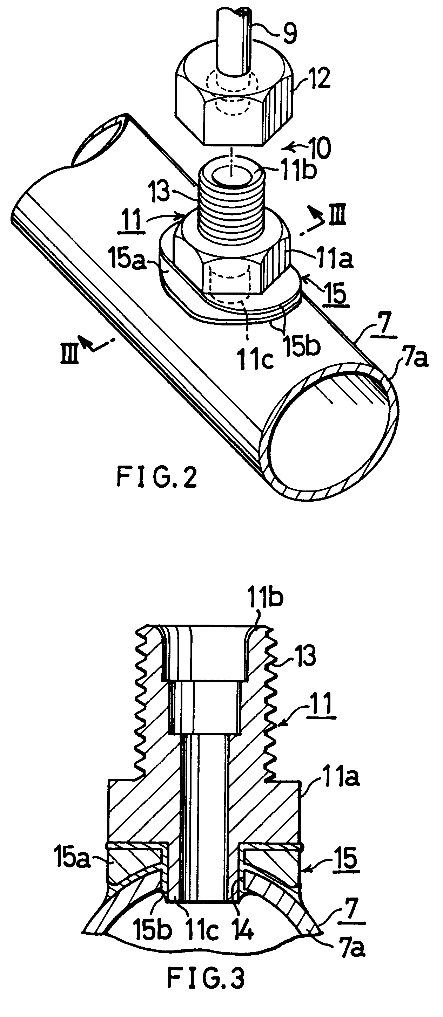

As shown in detail in FIGS. 2 and 3, the pipe joint 10 comprises a pipe joint member 11 made, for example, of aluminum and attached to the peripheral wall 7a of the heat medium discharge pipe 7 in communication with the interior thereof, and a cap nut 12 made, for example, of aluminum and rotatably attached to the above-mentioned other end of the equalizer 9. The joint member 11 attached to the discharge pipe 7 is integrally formed with an outward flange 11a positioned at an intermediate portion of its length and having an outer periphery which is hexagonal in cross section. The joint member 11 has a tubular portion 11b extending upward from the flange 11a and externally threaded to provide a male screw 13, and a tubular portion 11c extending downward from the flange 11a. The tubular portion 11c has its lower end inserted in a hole 14 formed in the peripheral wall 7a of the discharge pipe 7. The joint member 11 is joined to the peripheral wall 7a of the discharge pipe 7 with a brazing ring 15 fitted around the lower tubular portion 11c and positioned outside the discharged pipe 7. Around the tubular portion 11c, a brazing material 15b is provided in the hole 14 and also in the hole of the ring 15. The cap nut 12 rotatably attached to the end of the equalizer 9 is screwed on the male screw 13 of the tubular portion 11b of the joint member 11, whereby the equalizer 9 is connected to the peripheral wall 7a of the discharge pipe 7.

The pipe joint member 11 is secured to the peripheral wall 7a of the heat medium discharge pipe 7 in the following manner.

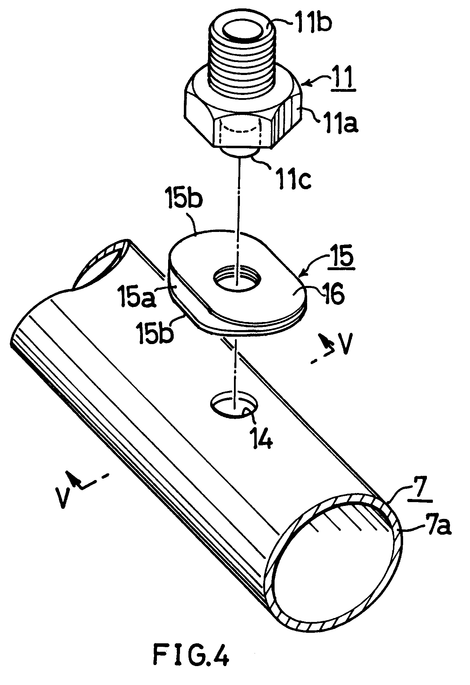

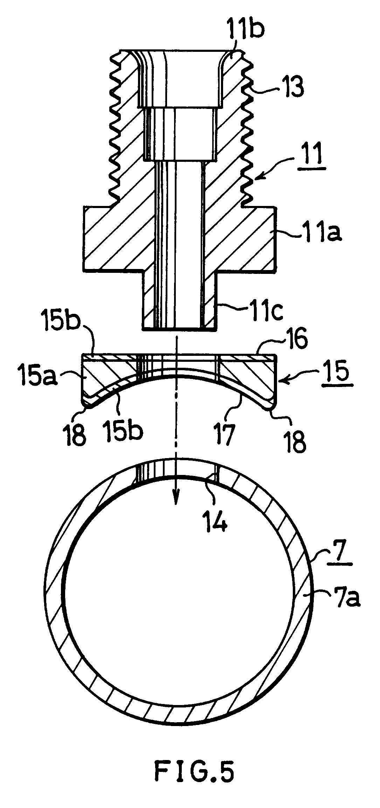

With reference to FIGS. 4 and 5, the brazing ring 15 is fitted around the tubular portion 11c of the joint member 11 extending downward from its outward flange 11a. The brazing ring 15 is prepared, for example, by pressing an aluminum brazing sheet comprising a core 15a and a cladding of brazing material 15b formed over each of opposite surfaces of the core. The upper surface of the ring is a flat surface 16 fittable to the outward flange 11c in intimate contact therewith, and the lower surface thereof is an inwardly curved fragmentary cylindrical surface 17 fittable to the outer surface of the discharge pipe peripheral wall 7a in intimate contact therewith. Each of opposite ends, with respect to the circumferential direction, of the cylindrical surface 17 is slightly separated from the outer surface of the peripheral wall 7a radially outwardly of the pipe 7 as indicated at 18. This portion 18 serves to form a clearance between the cylindrical surface 17 and the outer surface of the peripheral wall 7a for depositing the brazing material therein (see FIG. 3). With the tubular portion 11c of the joint member 11 inserted in the hole 14 formed in the peripheral wall 7a, the resulting assembly is heated to join the brazing ring 15 to the outward flange 11a of the joint member 11 and to the outer surface of the peripheral wall 7a of the discharge pipe 7 by brazing, whereby the pipe joint member 11 is attached to the discharge pipe 7.

The pipe joint member 11 is joined to the heat medium discharge pipe 7 with the brazing ring 15 in this way concurrently when the evaporator 1 is fabricated by assembling the zigzag flat tube 2, corrugated fins 3, inlet header 4, outlet header 5, heat medium feed pipe 6 and heat medium discharge pipe 7. After all the components have been assembled, the assembly is collectively brazed in a vacuum, whereby the outward flange 11a of the joint member 11 is brazed to the outer surface of the peripheral wall 7a of the discharge pipe 7 with the brazing ring 15.

FIGS. 6 to 10 show a tubular body having a pipe joint member as another embodiment of the invention as applied to each header of a condenser for motor vehicle air conditioners.

With reference to FIG. 6 showing the condenser 20 in its entirety, the condenser 20 comprises a pluraltiy of flat tubes 21 made, for example, of aluminum, extending horizontally and arranged one above another at a predetermined spacing, an inlet header 22 and an outlet header 23 each in the form of a pipe of circular cross section and having connected thereto the respective ends of the tubes 21, and corrugated fins 24 made, for example, of aluminum and provided between the adjacent flat tubes 21. The same pipe joint member 11 as in the first embodiment is attached to each of the inlet header 22 and the outlet header 23. A heat medium feed pipe (not shown) is connected to the inlet header 22 with the joint member 11 thereon. A heat medium discharge pipe (not shown) is connected to the outlet header 23 with the joint member 11 thereon. The inlet header 22 and the outlet header 23 have the same construction, so that the outlet header 23 will be described. With reference to FIG. 7, the outlet header 23 is prepared from a plate 25 which is, for example, an aluminum brazing sheet comprising a core 25a and a cladding of brazing material 25b formed over each of opposite surfaces of the core, by forming the plate 25 into a tube of circular cross section by press work, with opposite side edges butting against each other, and joining the butting edges together. A hole 26 is formed in the header 23 across the butt joint. In the same manner as in the first embodiment, the pipe joint member 11 is brazed to the outer surface of the peripheral wall 23a of the outlet header 23 with a brazing ring 15.

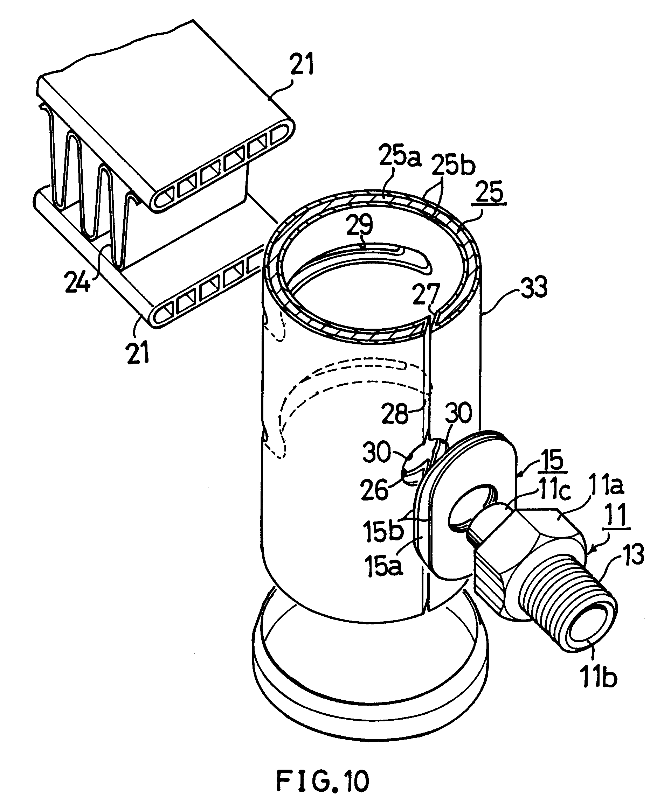

The method of producing the outlet header 23 will be described in greater detail with reference to FIGS. 8 to 10. The outlet header 23 is produced concurrently with assembling of the flat tubes 21 and the corrugated fins 24 and simultaneously with the production of the inlet header 22 for the fabrication of the condenser 20. First, a plate 25 is prepared which is made of an aluminum brazing sheet comprising a core 25a and a brazing material layer 25b covering each of opposite surfaces of the core 25a, and semicircular cutouts 30 are formed in the respective opposite side edges of the plate at the same position with respect to the lengthwise direction of the plate. Next, the side edges of the plate 25 are struck with a hammer or press in the direction of its thickness. One of the side edges is thus hammered or pressed on the upper surface of the plate, and the other side edge on the lower surface, whereby a face 27 slanting downward is formed at the above-mentioned one side edge, and a face 28 slanting upward at the other side edge as seen in FIG. 8. Both the slanting faces 27, 28 are covered with a brazing material layer 25b. The plate 25 thus formed with the slanting faces 27, 28 is then subjected to press work to form a semicylindrical portion 31, horizontal portions 32 along the respective side edges thereof, and a plurality of slits 29 in the bottom of the semicylindrical portion 31 for inserting the respective flat tubes 21 therein, the slits 29 extending widthwise of the plate 25 and arranged at a predetermined spacing longitudinally of the plate (see FIG. 9). The entire plate 25 is then subjected to press work again and thereby formed into a tubelike shape having a circular cross section as seen in FIG. 10, with a small clearance provided between the opposed side edge slanting faces 27 and 28 as shown in FIG. 10. The length of the slits 29 is slightly smaller than the width of the flat tubes 21. The flat tubes 21 are forced each at its one end into the slits 29. With the tube ends forced into the slits 29, the opposed side edge slanting faces 27, 28 are brought into intimate contact with each other, and the cutouts 30 provide a hole 26. In this way, a tubelike body 33 is formed which has a circular cross section and an outer peripheral surface of the same curvature as the inwardly curved fragmentary cylindrical surface 17 of a brazing ring 15. Corrugated aluminum fins 24 are then arranged between the adjacent flat tubes 21. The tubular portion 11c of a pipe joint member 11 having the brazing ring 15 fitted therearound is further inserted into the hole 26, with the flat surface 16 of the ring 15 brought into intimate contact with the outward flange 11a of the joint member 11 and with the cylindrical surface 17 into intimate contact with the outer surface of the tubelike body 33. The assembly is then entirely brazed in a vacuum. Consequently, the slanting faces 27, 28 of the tubelike body 33 are brazed to each other to give an outlet header 23, and the brazing ring 15 is joined to the outward flange 11a of the joint member 11 and to the outer surface of the outlet header 23 by brazing, whereby the joint member 11 is attached to the outlet header 23.

## Claims

1. A tubular body having a pipe joint member attached to the peripheral wall thereof and communicating with the interior of the tubular body (7,22,23), the peripheral wall (7a,23a) of the tubular body including a curved wall portion having a circular-arc cross section and formed with a hole (14), the pipe joint member (11) having an outward flange (11a) and a tubular portion (11c) positioned beyond the outward flange toward one end of the joint member, the tubular portion (11c) being inserted in the hole (14) formed in the curved wall portion of the tubular body, the outward flange (11a) of the joint member (11) being brazed to the surface of the curved wall portion of the tubular body, a brazing ring (15) being fitted around the tubular portion of the joint member (11) and positioned outside the tubular body (7,22,23), the brazing ring having a first surface being an inwardly curved fragmentary cylindrical surface joint to the outer surface of the curved wall portion, **characterized** in that the flange (11a) of the pipe joint member (11) is provided at an intermediate portion of the length of the tubular portion thereof, the tubular portion (11c) having its outer end inserted into the hole (14) from outside of the tubular body (7,22,23), the outward flange (11a) of the joint member (11) being brazed to the outer surface of the curved wall portion of the tubular body with the brazing ring (15) fitted around the tubular portion (11c) of the joint member (11) between the outward flange (11a) and the tubular body, the brazing ring being made of a brazing sheet including a cladding of brazing material (15b) over each of its opposite surfaces, the brazing ring having a second surface joint to the outward flange (11a).

2. A tubular body having a pipe joint member as claimed in claim 1, **characterized** in that the tubular body (7,22,23) is a pipe having a circular cross section.

3. A tubular body having a pipe joint member as claimed in claim 1, **characterized** in that the tubular body (22,23) is prepared by forming a plate into a tube of circular cross section with its opposite side edged butting against each other and joining the edges together with a brasing material, and that the hole (26) is formed in the side edges of the plate across the butt joint.

4. A tubular body having a pipe joint member as claimed In claimed 1, **characterized** in that the outer periphery of the outward flange (11a) of the pipe joint member (11) is hexagonal in cross section.

5. A tubular body having a pipe joint member as claimed in claim 1, **characterized** in that the tubular body is the heat medium discharge pipe of an evaporator for a motor vehicle air conditioner, and the pipe joint member is used for connecting to the heat medium discharge pipe an equalizer extending from an expansion valve mounting on the heat medium feed pipe of the evaporator.

6. A tubular body having a pipe joint member as claimed in claim 1, **characterized** in that the tubular body is the header of a condenser for a motor vehicle air conditioner, and the pipe joint member is used for connecting a heat medium feed pipe or heat medium discharge pipe to the header.

## Patentansprüche

1. Rohrförmiger Körper mit einem Rohrverbindungsstück, das an dessen Umfangswand befestigt ist und mit dem Inneren des rohrförmigen Körpers (7,22,23) in Verbindung steht, wobei die Umfangswand (7a,23a) des rohrförmigen Körpers einen gekrümmten Wandbereich aufweist, der einen kreisbogenförmigen Querschnitt besitzt und mit einer Bohrung (14) versehen ist, wobei das Rohrverbindungsstück (11) einen nach außen gerichteten Flansch (11a) und einen rohrförmigen Bereich (11c), der jenseits des nach außen gerichteten Flansches in Richtung eines Endes des Verbindungsstücks angeordnet ist, umfaßt, wobei der rohrförmige Bereich (11c) in die Bohrung (14) in dem gekrümmten Wandbereich des rohrförmigen Körpers eingefügt wird, der nach außen gerichtete Flansch (11a) des Verbindungsstucks (11) gegen die Oberfläche des gekrümmten Wandbereichs des rohrförmigen Körpers gelötet wird, ein Lötring (15) um den rohrförmigen Bereich des Verbindungsstücks (11) herum außerhalb des rohrförmigen Körpers (7,22,23) gelegt wird, der Lötring eine erste Oberfläche aufweist, die nach innen in einer Teilzylinderfläche gekrümmt ist, die mit der Außenfläche des gekrümmten Wandbereichs verbunden wird, dadurch **gekennzeichnet,** daß der Flansch (11a) des Rohrverbindungsstücks (11) in einem Zwischenbereich der Länge seines rohrförmigen Abschnitts vorgesehen ist, daß der rohrförmige Abschnitt (11c) mit seinem äußeren Ende in die Bohrung (14) des rohrförmigen Körpers (7,22,23) eingefügt ist, der nach außen gerichtete Flansch (11a) des Verbindungsstücks (11) gegen die äußere Oberfläche des gekrümmten Wandbereichs des rohrförmigen Körpers gelötet wird, wobei der Lötring (15), der um den rohrförmigen Bereich (11c) des Verbindungsstücks (11) herum liegt, zwischen dem nach außen gerichteten Flansch (11a) und dem rohrförmigen Körper liegt, wobei der Lötring (15) aus einem Lötblatt hergestellt ist, das eine Beschichtung aus Lötmaterial (15b) auf jeder seiner gegenüberliegenden Oberflächen aufweist, wobei der Lötring eine zweite Oberfläche besitzt, die mit dem nach außen gerichteten Flansch (11a) verbunden ist.

2. Rohrförmiger Körper mit einem Rohrverbindungsstück gemäß Anspruch 1, dadurch **gekennzeichnet,** daß der rohrförmige Körper (7,22,23) ein Rohr mit einem kreisförmigen Querschnitt ist.

3. Rohrförmiger Körper mit einem Rohrverbindungsstück gemäß Anspruch 1, dadurch **gekennzeichnet,** daß der rohrförmige Körper (22,23) hergestellt ist durch Verformen einer Platte zu einem Rohr mit kreisförmigem Querschnitt, dessen gegenüberliegende Kanten gegeneinanderliegen, und durch Verbinden der Kanten mit Hilfe von Lötmaterial, und daß die Bohrung gebildet ist in den seitlichen Kanten der Platte auf beiden Seiten der Stoßverbindung.

4. Rohrförmiger Körper mit einem Rohrverbindungsstück gemäß Anspruch 1, dadurch **gekennzeichnet,** daß der äußere Umfang des nach außen gerichteten Flansches (11a) des Rohrverbindungsstücks (11) Im Querschnitt sechseckig ist.

5. Rohrförmiger Körper mit einem Rohrverbindungsstück gemäß Anspruch 1, dadurch **gekennzeichnet,** daß der rohrförmige Körper ein ein Wärmemedium abgebendes Rohr eines Verdampfers einer Kraftfahrzeug-Klimaanlage ist, und daß das Rohrverbindungsstück verwendet ist zur Verbindung des das Wärmemedium abgebenden Rohres, mit einem Ausgieichsrohr, daß sich von einem Entspannungsventil an einer Zufuhrleitung des Wärmemediums des Verdampfers erstreckt.

6. Rohrförmiger Körper mit einem Rohrverbindungsstück gemäß Anspruch 1, dadurch **gekennzeichnet,** daß der rohrförmige Körper das Kopfstück eines Kondensators für eine Kraftfahrzeug-Klimaanlage ist und daß das Rohrverbindungsstuck verwendet wird zum Verbinden eines Zuleitungsrohrs für ein Wärmemedium oder Abgaberohrs für das Wärmemedium mit dem Kopfstück.

## Revendications

1. Corps tubulaire comportant un élément de raccordement de tuyaux rapporté sur sa paroi latérale et communiquant avec l'intérieur du corps tubulaire (7,22,23), la paroi latérale (7a,23a) du corps tubulaire comprenant une portion de paroi incurvée qui présente une section transversale en arc de cercle et est pourvue d'un trou (14), l'élément de raccordement de tuyaux (11) comportant une collerette externe (11a) et un tronçon tubulaire (11c) situé au-delà de la collerette externe, en direction d'une première extrémité de l'élément de raccordement, le tronçon tubulaire (11c) étant inséré dans le trou (14) ménagé dans la portion de paroi incurvée du corps tubulaire, la collerette externe (11a) de l'élément de raccordement (11) étant réunie par brasage à la surface de la portion de paroi incurvée du corps tubulaire, une bague de brasage (15) étant ajustée autour du tronçon tubulaire de l'élément de raccordement (11), dans une position extérieure au corps tubulaire (7,22,23), la bague de brasage présentant une première surface qui est une surface cylindrique partielle, incurvée vers l'intérieur, jointe à la surface extérieure de la portion de paroi incurvée, caractérisé en ce que la collerette (11a) de l'élément de raccordement de tuyaux (11) se trouve sur une partie intermédiaire, dans le sens de la longueur, du tronçon tubulaire de ce dernier, le tronçon tubulaire (11c) ayant son extrémité extérieure insérée dans le trou (14) depuis l'extérieur du corps tubulaire (7,22,23), la collerette externe (11a) de l'élément de raccordement (11) étant réunie par brasage à la surface extérieure de la portion de paroi incurvée du corps tubulaire à l'aide de la bague de brasage (15) ajustée autour du tronçon tubulaire (11c) de l'élément de raccordement (11), entre la collerette externe (11a) et le corps tubulaire, la bague de brasage étant réalisée à partir d'une feuille de brasage comportant un revêtement de matériau de brasage (15b) sur chacune de ses surfaces opposées, la bague de brasage présentant une seconde surface jointe à la collerette externe (11a).

2. Corps tubulaire comportant un élément de raccordement de tuyaux, tel que défini dans la revendication 1, caractérisé en ce que le corps tubulaire (7,22,23) est un tuyau présentant une section transversale circulaire.

3. Corps tubulaire comportant un élément de raccordement de tuyaux, tel que défini dans la revendication 1, caractérisé en ce que le corps tubulaire (22,23) est confectionné à partir d'une plaque mise sous la forme d'un tube de section transversale circulaire, dont les bords latéraux opposés sont aboutés l'un à l'autre et liés l'un à l'autre à l'aide d'un matériau de brasage, et en ce que le trou (26) est ménagé dans les bords latéraux de la plaque, à cheval sur le joint d'aboutement.

4. Corps tubulaire comportant un élément de raccordement de tuyaux, tel que défini dans la revendication 1, caractérisé en ce que le contour extérieur de la collerette externe (11a) de l'élément de raccordement de tuyaux (11) est hexagonal, vu en coupe transversale.

5. Corps tubulaire comportant un élément de raccordement de tuyaux, tel que défini dans la revendication 1, caractérisé en ce que le corps tubulaire est le tuyau d'évacuation du fluide caloporteur d'un évaporateur pour un climatiseur de véhicule automobile, et l'élément de raccordement de tuyaux est utilisé pour raccorder au tuyau d'évacuation du fluide caloporteur, un équilibreur s'étendant depuis une soupape de détente montée sur le tuyau d'amenée du fluide caloporteur de l'évaporateur.

6. Corps tubulaire comportant un élément de raccordement de tuyaux, tel que défini dans la revendication 1, caractérisé en ce que le corps tubulaire est le collecteur d'un condenseur pour un climatiseur de véhicule automobile, et l'élément de raccordement de tuyaux est utilisé pour raccorder un tuyau d'amenée de fluide caloporteur ou un tuyau d'évacuation de fluide caloporteur, au collecteur.
